# EUROPEAN PATENT APPLICATION

(11) **EP 4 539 236 A2**
(43) Date of publication of application: **16.04.2025**
(21) Application number: 24821730.9
(22) Date of filing: 29.09.2024
(51) Int. Cl.: H01M 50/417

(54) **ULTRA-HIGH MOLECULAR WEIGHT POLYOLEFIN SEPARATOR AND PREPARATION METHOD THEREFOR**

(30) Priority: 27.08.2024 CN 202411181336
(71) Applicant: Shanghai Energy New Materials Technology Co., Ltd., Shanghai 201399 (CN)
(72) Inventor: YAN, Luoxia, Shanghai 201399 (CN); YU, Shaobo, Shanghai 201399 (CN); XIONG, Lei, Shanghai 201399 (CN); LIU, Lianjing, Shanghai 201399 (CN); YAN, Xiaoxiang, Shanghai 201399 (CN); YANG, Xu, Shanghai 201399 (CN); CHEN, Yongle, Shanghai 201399 (CN); CHENG, Yue, Shanghai 201399 (CN)
(74) Representative: Ipside
(86) International application number: PCT/CN2024/122133
(87) International publication number: WO 2025/040188

(57) **Abstract**

The present application provides an ultrahigh-molecular-weight polyolefin separator, including ultrahigh-molecular-weight polyethylene. ultrahigh-molecular-weight polyethylene has an average molecular weight of ≥ 1 million. The ultrahigh-molecular-weight polyolefin separator has a median aperture of 0.04 µm - 1 µm, the maximum aperture of no more than 1.2 µm, and a puncture strength of ≥50 gf. Further, the present application further provides a method for preparing an ultrahigh-molecular-weight polyolefin separator. Because the polyolefin separator is safer than an ordinary non-woven separator, and has higher ionic conductivity and larger median aperture, the problems that an ordinary non-woven separator of a lithium-ion battery, although having a high lithium-ion passage rate, has a high degree of danger, and is prone to cause a short circuit of the battery are exactly solved.

## Description

### TECHNICAL FIELD

The present application relates to the technical field of lithium-ion battery materials, and particularly to an ultrahigh-molecular-weight polyolefin separator and a method for preparing the same.

### BACKGROUND

As a porous high-functional material, a lithium-ion battery separator not only plays a role in the transmission of lithium ions, but also plays a role in isolating a positive electrode from a negative electrode to avoid a short circuit caused by direct contact between positive and negative electrode materials. As a lithium-ion transmission channel in a battery, the lithium-ion battery separator is crucial for the transmission and diffusion speeds of lithium ions. The advantages and disadvantages of the performance of the separator play a key role in the property of the battery. The separator with a better electrolyte wetting capacity has higher ionic conductivity, which is more conducive to the transmission of the lithium ions in the separator, increases the ionic conductivity efficiency, and is conducive to the fast charging and discharging of the battery.

At present, there are two main methods to improve an electrolyte wetting speed and ionic conductivity of the separator. One method is to improve a pore structure of a basement membrane, improve the porosity of the basement membrane and reduce a degree of zigzag to increase a straight through hole. The larger the porosity, and the more pores in the separator, the more easily the lithium ions are migrated. The smaller the degree of zigzag, and the more the straight through-holes, the shorter a path in which the lithium ions are migrated, the faster a migration speed. However, the large number of the pores and an increase in the straight through-holes lead to a reduction in the strength of the separator. In a preparation process, the separator is pierced by a foreign object to cause an increased risk of a short circuit. The second method is to coat and modify the surface of the basement membrane. An ordinary coating includes inorganic coatings such as alumina or boehmite, and an organic coating such as PVDF. Traditional coating and modification can improve a liquid-absorbing ability and a liquid-retaining ability to a certain degree, but there are still problems such as a slow electrolyte wetting and low ionic conductivity.

A wetting separator of an ordinary lithium battery has generally a median aperture of 30nm - 40nm, which cannot meet a passage rate of the lithium ions in a fast-charging industry. Further, a current fast-charging separator process is generally a non-woven process, which can indeed meet a high passage rate of the lithium ions, but is very dangerous, and is easy to cause the short circuit of the battery. Therefore, how to have higher ionic conductivity while having a high degree of safety is a key problem to be solved.

### SUMMARY

Therefore, a main objective of the present application is to provide an ultrahigh-molecular-weight polyolefin separator and a method for preparing the same, to more optimize the above problems.

To solve the above technical problems, an objective of the present application is to provide an ultrahigh-molecular-weight polyolefin separator, including ultrahigh-molecular-weight polyethylene. The ultrahigh-molecular-weight polyethylene has an average molecular weight of ≥1 million. The ultrahigh-molecular-weight polyolefin separator has a median aperture of 0.04 µm - 1 µm, a maximum aperture of no more than 1.2 µm, and a puncture strength of ≥50 gf.

For the above ultrahigh-molecular-weight polyolefin separator, the ultrahigh-molecular-weight polyethylene has an average molecular weight of 1 million - 1.5 million.

For the above ultrahigh-molecular-weight polyolefin separator, the ultrahigh-molecular-weight polyolefin separator has a thickness of 7 µm - 15 µm.

For the above ultrahigh-molecular-weight polyolefin separator, the ultrahigh-molecular-weight polyolefin separator has an ionic conductivity of ≥ 1.8 mS/cm.

Another objective of the present application is to provide a method of preparing an ultrahigh-molecular-weight polyolefin separator, including the following steps: a step of preparing micrometer-grade or submicrometer-grade sodium chloride particles: adding ball beads to sodium chloride for ball grinding, grinding and then sieving and drying, and then adding a white oil to continue grinding, and then preparing the micrometer-grade or submicrometer-grade sodium chloride particles; a step of mixing raw materials: selecting and mixing ultrahigh-molecular-weight polyethylene and the micron-grade or submicron-grade sodium chloride particles in the white oil, stirring thoroughly with a stirrer to form a premixed raw material, where ultrahigh-molecular-weight polyethylene has an average molecular weight of ≥1 million, the white oil has a content greater than that of ultrahigh-molecular-weight polyethylene, and the ultrahigh-molecular-weight polyethylene has a content greater than that of the micrometer-grade or submicrometer-grade sodium chloride particles; a step of extrusion and molding: adding the premixed raw material to an extruder and subsequently extruding to form a cast sheet; a step of extraction: first placing the cast sheet obtained by the extrusion and the molding in a mixture of acetone and water for extraction, and subsequently performing ultrasonic treatment while cleaning off sodium chloride and a part of the white oil in pores, then cleaning residual acetone on a surface with pure water, wiping a product dry, and then placing the product into pure dichloromethane for re-extraction, to form an extracted raw material; and a step of stretching: subsequently placing the extracted raw material obtained by the extrusion and the molding into a handkerchief machine for stretching, and obtaining the ultrahigh-molecular-weight polyolefin separator after stretching.

For the above method for preparing the ultrahigh-molecular-weight polyolefin separator, in the step of preparing the micrometer-grade or submicrometer-grade sodium chloride particles, zirconium ball beads of at least three different sizes are added to ordinary industrial grade sodium chloride; a mixture is ground and then sieved and dried; then, the white oil is added to continue grinding, where the addition of the white oil can ensure that sodium chloride does not absorb water; the micrometer-grade or submicrometer-grade sodium chloride particles are produced after grinding, where the ordinary industrial grade sodium chloride is an industrial salt with sodium chloride purity of 99% or more and a particle size of 0.5 mm - 2 mm, and the zirconium ball beads have the maximum diameter of no more than 1 mm.

For the above method of preparing the ultrahigh-molecular-weight polyolefin separator, the micrometer-grade or submicrometer-grade sodium chloride particles have a diameter of 0.1 µm - 1 µm.

For the above method for preparing the ultrahigh-molecular-weight polyolefin separator, in the step of mixing the raw materials, on the basis of the total weight of the premixed raw material, the micrometer-grade or submicrometer-grade sodium chloride particles have a weight percentage of content of 1wt% - 20wt%; the ultrahigh-molecular-weight polyethylene has a weight percentage of content of 1wt% - 29wt%, and the white oil has a weight percentage of 60wt% - 80wt%.

For the above method of preparing the ultrahigh-molecular-weight polyolefin separator, the ultrahigh-molecular-weight polyethylene has an average molecular weight of 1 million - 1.5 million.

For the above method for preparing the ultrahigh-molecular-weight polyolefin separator, in the step of preparing the micrometer-grade or submicrometer-grade sodium chloride particles, shapes of the micrometer-grade or submicrometer-grade sodium chloride particles include a spherical shape, a spheroidal shape or an irregular spherical shape, and the micrometer-grade or submicrometer-grade sodium chloride particles have a particle size distribution approximating a normal distribution, where 80% of the sodium chloride particles are spheroidal.

For the present application, the micrometer-grade or submicrometer-grade sodium chloride particles are introduced into the production process of the separator, the separator is controlled to achieve a better median aperture and the maximum aperture by limiting the content of the sodium chloride particles and the particle size distribution thereof, and a special process of extraction followed by stretching is adopted, so that the aperture is appropriate, neither too large nor too small. Therefore, the obtained ultrahigh-molecular-weight polyolefin separator possesses both higher safety performance and higher ionic conductivity.

### BRIEF DESCRIPTION OF THE DRAWINGS

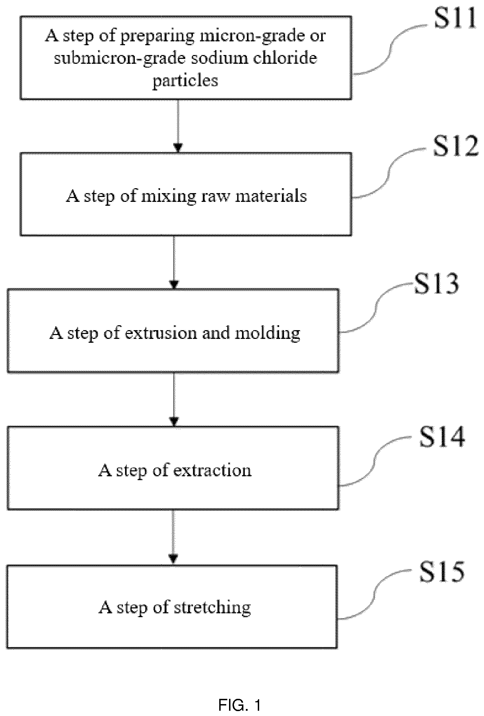

FIG. 1 is a flowchart block diagram of a method for preparing an ultrahigh-molecular-weight polyolefin separator according to an embodiment of the present application.

### DETAILED DESCRIPTION OF EMBODIMENTS

To further elaborate the technical means and efficacy adopted in the present application for achieving the intended inventive objective, an ultrahigh-molecular-weight polyolefin separator and a method for preparing the same, a specific implementation thereof, a structure thereof, a feature thereof and an efficacy thereof proposed according to the present application are described in details in conjunction with the accompanying drawings and specific embodiments hereinafter.

An ultrahigh-molecular-weight polyolefin separator according to one embodiment of the present application includes ultrahigh-molecular-weight polyethylene. The ultrahigh-molecular-weight polyethylene has an average molecular weight of ≥ 1 million. The ultrahigh-molecular-weight polyolefin separator has a median aperture of 0.04 µm - 1 µm, the maximum aperture of no more than 1.2 µm, and a puncture strength of ≥ 50 gf.

In some embodiments, the ultrahigh-molecular-weight polyethylene has an average molecular weight of 1 million - 1.5 million. In some embodiments, the ultrahigh-molecular-weight polyolefin separator may be made of high-density polyethylene, high-molecular-weight polyethylene, or ultrahigh-molecular-weight polyethylene grafting material in addition to the ultrahigh-molecular-weight polyethylene. Under the conditions other than ultrahigh-molecular-weight polyethylene, the ultrahigh-molecular-weight polyethylene accounts for at least greater than 80 wt% on the basis of the total weight of the ultrahigh-molecular-weight polyolefin separator. In some embodiments, the ultrahigh-molecular-weight polyolefin separator has a median aperture of 0.04 µm - 0.5 µm, preferably 0.04 µm, 0.05 µm, 0.1 µm, or 0.5 µm. In some embodiments, the ultrahigh-molecular-weight polyolefin separator has the maximum aperture of 0.11 µm - 1.2 µm, preferably 0.11 µm, 0.15 µm, 0.25 µm, or 1.2 µm. In some embodiments, the ultrahigh-molecular-weight polyolefin separator has a puncture strength of 50 gf - 150 gf, preferably 50 gf, 80 gf, 90 gf, or 150 gf.

In some embodiments, by limiting a thickness of the ultrahigh-molecular-weight polyolefin separator to 15 µm, the median aperture thereof to 100 nm, and the maximum aperture thereof to 0.25 µm, the safety of a battery is ensured, i.e., the thickness of the separator is ensured. At the same time, it is ensured that higher ionic conductivity is obtained because an ionic passage rate is directly determined by the aperture, and a larger aperture of 1 µm can obtain a higher ionic conductivity of ≥ 3 mS/cm. In some other embodiments, the ultrahigh-molecular-weight polyolefin separator has a thickness of 7 µm - 15 µm, preferably 7 µm, 9 µm, 12 µm, or 15 µm, and ionic conductivity of ≥ 1.8 mS/cm, preferably 1.8 mS/cm, 2.1 mS/cm, 3 mS/cm, or 4.8 mS/cm.

Referring to FIG. 1, in another embodiment, the present application provides a method 1 of preparing an ultrahigh-molecular-weight polyolefin separator, including the following steps: step S11 of preparing micrometer-grade or submicrometer-grade sodium chloride particles: adding ball beads to sodium chloride for ball grinding, grinding and then sieving and drying, and then adding a white oil to continue grinding, and then preparing the micrometer-grade or submicrometer-grade sodium chloride particles; step S12 of mixing raw materials: selecting and mixing ultrahigh-molecular-weight polyethylene and the micron-grade or submicron-grade sodium chloride particles in the white oil, stirring thoroughly with a stirrer to form a premixed raw material, where ultrahigh-molecular-weight polyethylene has an average molecular weight of ≥1 million, the white oil has a content greater than that of ultrahigh-molecular-weight polyethylene, and the ultrahigh-molecular-weight polyethylene has a content greater than that of the micrometer-grade or submicrometer-grade sodium chloride particles; step S13 of extrusion and molding: adding the premixed raw material to an extruder and subsequently extruding to form a cast sheet; step S14 of extraction: first placing the cast sheet obtained by the extrusion and the molding in a mixture of acetone and water for extraction, and subsequently performing ultrasonic treatment while cleaning off sodium chloride and a part of the white oil in pores, then cleaning residual acetone on a surface with pure water, wiping a product dry, and then placing the product into pure dichloromethane for re-extraction, to form an extracted raw material; and step S15 of stretching: subsequently placing the extracted raw material obtained by the extrusion and the molding into a handkerchief machine for stretching, and obtaining the ultrahigh-molecular-weight polyolefin separator after stretching.

In some embodiments, in step S11 of preparing the micrometer-grade or submicrometer-grade sodium chloride particles, zirconium ball beads of three different sizes of a large size, a medium size, and a small size are added to ordinary industrial grade sodium chloride; a mixture is ground for 4 hours, opened, then sieved, and dried for 1 hour; then, the white oil is added to continue grinding, where the addition of the white oil ensures that sodium chloride does not absorb water; after grinding for 4 hours, the uniform micrometer-grade or submicrometer-grade sodium chloride particles are produced, where ordinary industrial grade sodium chloride is an industrial salt with sodium chloride purity of 99% or more and a particle size of 0.5 mm - 2 mm; the small size zirconium ball beads have a diameter of 0.2 mm; the medium size zirconium ball beads have a diameter of 0.5 mm, and the large size zirconium ball beads have a diameter of 1 mm; therefore, the zirconium ball beads in the embodiment have the maximum diameter of no more than 1 mm.

However, without limitation, in other embodiments, the zirconium ball beads can be replaced with other grinding equipment. Ordinary industrial grade sodium chloride can be ground, so that the sodium chloride particles have the maximum particle size reaching below 1 µm (micrometer) and can be applied in the present application. In step S11 of preparing the micrometer-grade or submicrometer-grade sodium chloride particles, shapes of the micrometer-grade or submicrometer-grade sodium chloride particles include a spherical shape, a spheroidal shape or an irregular spherical shape, and the micrometer-grade or submicrometer-grade sodium chloride particles have a particle size distribution approximating a normal distribution, where 80% of the sodium chloride particles are spheroidal. It is to be understood that the shapes and the particle size distribution of such sodium chloride particles are conducive to the size distribution and shapes of the apertures forming the ultrahigh-molecular-weight polyolefin separator.

In some embodiments, in step S12 of mixing the raw materials, ultrahigh-molecular-weight polyethylene is selected to be mixed with the micrometer-grade or submicrometer-grade sodium chloride particles prepared before in the white oil, and stirred well with a stirrer to form a premixed raw material. Ultrahigh-molecular-weight polyethylene has an average molecular weight of 1 million to 1.5 million. On the basis of the total weight of the premixed raw material, the micrometer-grade or submicrometer-grade sodium chloride particles account for 10 wt%. Ultrahigh-molecular-weight polyethylene accounts for 20 wt%. The white oil accounts for 70 wt%. The micrometer-grade or submicrometer-grade sodium chloride particles have a diameter of 0.1 µm - 1 µm. However, without limitation, in other embodiments, on the basis of the total weight of the premixed raw material, the micrometer-grade or submicrometer-grade sodium chloride particles preferably account for 1 wt% - 20 wt%, more preferably in a range between any two values of 1 wt%, 10 wt%, and 20 wt%. Ultrahigh-molecular-weight polyethylene accounts for 1 wt% - 29 wt%, more preferably in a range between any two values of 1 wt%, 16 wt%, 18wt%, 19.8wt%, and 29wt%. The white oil accounts for 60wt% - 80wt%, more preferably in a range between any two values of 60wt%, 64wt%, 72wt%, 79.2wt%, and 80wt%. More preferably, the micrometer-grade or sub-micrometer-grade sodium chloride particles account for 1wt%; ultrahigh-molecular-weight polyethylene accounts for 19.8 wt%, and the white oil accounts for 79.2 wt%. More preferably, the micrometer-grade or submicrometer-grade sodium chloride particles account for 10 wt%; ultrahigh-molecular-weight polyethylene accounts for 18 wt%, and the white oil accounts for 72 wt%. More preferably, the micrometer-grade or submicrometer-grade sodium chloride particles account for 20 wt%;ultrahigh-molecular-weight polyethylene accounts for 16 wt%, and the white oil accounts for 64 wt% .

In this embodiment, in step S13 of the extrusion and molding, a well-mixed mixture of the micrometer-grade or submicrometer-grade sodium chloride particles with 10% content, ultrahigh-molecular-weight polyethylene with 20% content, and the white oil with 70% is added to the extruder, and extruded to form a homogeneous cast sheet. In step S14 of the extraction, the cast sheet obtained by the extrusion and the molding is first placed in a mixture of acetone and water for extraction and then ultrasonically treated while being cleaned off for sodium chloride and a part of the white oil in the pores. Residual acetone on a surface is washed with pure water. A product is wiped dry. Then, the product is placed into pure dichloromethane for re-extraction.

It is worth mentioning that this embodiment is a special process of first extraction and then stretching. The step of the first extraction is to remove the white oil and sodium chloride and other pore-forming agents. At this time, the pores are retracted. Then, after tempered stretching, it can ensure that the pores are expanded to appropriate sizes, not too large and not too small. On the contrary, if a process of the first stretching and then extraction is used, due to the presence of the pore-forming agent, the size of the pores in a stretching process is more fixed at the beginning of the cast sheet. There is only a small expansion in the stretching process. Therefore, this process is not really effective in making the pores expanded.

For the present application, some parameters are designed for experiments. An experimental process and results are summarized as follows.

### Embodiment 1

For a fast-charging separator of the embodiment, micrometer-grade or submicrometer-grade sodium chloride particles had a particle size of 100nm. The fast-charging separator was prepared as follows: an ultrahigh-molecular-weight polyethylene powder was mixed with a white oil in a mass ratio of 2:8, and then further mixed with the sodium chloride particles to form a premixed raw material. The sodium chloride particles in the premixed raw material were 1 wt%. The remaining premixed raw material is the ultrahigh-molecular-weight polyethylene powder and the white oil mixed in a mass ratio of 2:8. The ultrahigh-molecular-weight polyethylene powder and the white oil were fused and mixed by a twin-screw extruder to form an ultrahigh-molecular-weight polyolefin separator after being cooled, extracted and stretched. A stretching condition was 10*10.

### Embodiment 2

A fast-charging separator of this embodiment was the same as Embodiment 1 except that sodium chloride had a weight percentage of content of 5%.

### Embodiment 3

For a fast-charging separator of this embodiment, micrometer-grade or submicrometer-grade sodium chloride particles have a particle size of 100 nm. A fast-charging separator was prepared as follows: an ultrahigh-molecular-weight polyethylene powder was mixed with a white oil in a mass ratio of 2:8, and then further mixed with sodium chloride particles to form a premixed raw material. The sodium chloride particles in the premixed raw material were 10 wt%. The remaining premixed raw material was the ultrahigh molecular weight polyethylene powder and the white oil mixed in a mass ratio of 2:8. The ultrahigh molecular weight polyethylene powder and the white oil were fused and mixed by a twin-screw extruder to form an ultrahigh molecular weight polyolefin separator after being cooled, extracted and stretched. A stretching condition was 6.5*6.5.

### Embodiment 4

A fast-charging separator of the embodiment was the same as Embodiment 3 except that sodium chloride had a weight percentage of content of 20%.

### Comparative Example 1

An ultrahigh-molecular-weight polyethylene powder and a white oil were fused and mixed in a mass ratio of 3:7 by a twin-screw extruder to form a polyethylene basement membrane after being cooled, stretched and extracted.

### Comparative Example 2

An ultrahigh-molecular-weight polyethylene powder was mixed with a white oil in a mass ratio of 2:8, and then further mixed with sodium chloride particles to form a premixed raw material. The sodium chloride particles in the premixed raw material were 10 wt%. The remaining premixed raw material was the ultrahigh molecular weight polyethylene powder and the white oil mixed in a mass ratio of 2:8. The ultrahigh molecular weight polyethylene powder and the white oil were fused and mixed by a twin-screw extruder to form a polyethylene basement membrane after being cooled, stretched and extracted.

### Comparative Example 3

An ultrahigh-molecular-weight polyethylene powder and a white oil were fused and mixed in a mass ratio of 3:7 by a twin-screw extruder to form a polyethylene basement membrane after being cooled, extracted and stretched.

**Table 1: Median aperture and other values in embodiments and comparative examples**

| | Embodiment 1 | Embodiment 2 | Embodiment 3 | Embodiment 4 | Comparative Example 1 | Comparative Example 2 | Comparative Example 3 |
|---|---|---|---|---|---|---|---|
| Mass ratio of ultrahigh-molecular-weight polyethylene powder to white oil | 2:8 | 2:8 | 2:8 | 2:8 | 3:7 | 2:8 | 3:7 |
| Sodium chloride content | 1.00% | 5.00% | 10.00% | 20.00% | 0.00% | 10.00% | 0.00% |
| Sodium chloride particle size of D50nm | **100** | **100** | **100** | **100** | **100** | **100** | **100** |
| Stretching magnification | 10*10 | 10*10 | 6.5*6.5 | 6.5*6.5 | 10*10 | 10*10 | 10*10 |
| Stretching method | Extract first and then stretch | Extract first and then stretch | Extract first and then stretch | Extract first and then stretch | Stretch before extraction | Stretch before extraction | Extract first and then stretch |
| Thickness µm | 9 | 7 | **15** | **12** | **10** | **10** | **10** |
| Median aperture nm | **40** | **50** | **100** | **500** | **30** | **45** | ***35*** |
| Maximum aperture nm | **110** | **150** | **250** | **1200** | **50** | **60** | **100** |
| Gas permeability s/100ml | **40** | **30** | **10** | **10** | **150** | **200** | **50** |
| Porosity % | **60** | **60** | **70** | **80** | **45** | **60** | **60** |
| Ionic conductivity mS/cm | **1.8** | **2.1** | **3** | **4.8** | **0.7** | **1.5** | **1.6** |
| Puncture strength gf | **90** | **80** | **150** | **50** | **300** | **250** | **100** |

The above experimental results are organized as shown in Table I. From the results in Table 1, for Embodiments 1, 2, 3, 4, it can be seen that a content of sodium chloride mainly affects a median aperture and the degree of uniformity of the distribution of the apertures. For Embodiment 4, it can be seen that when sodium chloride has a content of 20%, the largest aperture is 1000 nm or more, which cannot guarantee safety performance. Under the condition of a stretching magnification of 10*10 after a solid content is elevated, a thickness of sodium chloride has a tendency to decrease. For Comparative Examples 1 and 2, a general stretching process is adopted, that is, stretching first and then extraction. However, for this process, the aperture is smaller; ionic conductivity is smaller than previous one, and the fast-charging of a battery cannot be implemented. For Comparative Example 3, extraction is adopted first and then stretching is performed. The distribution of the apertures is not uniform, and strength is not too high.

In summary, to improve the safety performance of a current wetting separator of an ordinary lithium battery, the present application proposes an ultrahigh-molecular-weight polyolefin fast-charging separator. Through a specific process of preparation, a raw material of sodium chloride with a limited range of a particle size is obtained. If the separator is prepared in different processes, the number of times of extraction and a specific extractant and details of the steps are different to obtain the fast-charging separator with a larger median aperture of 0.04 µm - 1 µm. Therefore, the fast-charging separator has high ionic conductivity and can provide higher safety performance. Therefore, for the present application, the problem that the separator in the prior art cannot have fast-charging and high safety at the same time can be practically solved.

The above is only an embodiment of the present application, and is not a limitation of the present application in any form. Although the present application is disclosed as described above in a specific embodiment, the preferred embodiment is not used to limit the present application. Some changes or modifications may be made into the equivalent embodiments of equivalent changes utilizing the technical content disclosed in the above by a person skilled in the art without departing from the scope of the technical solution of the present application. However, any simple amendment, equivalent change or modification of the above embodiment made based on the technical substance of the present application without departing from the content of the technical solution of the present application still falls into the scope of the technical solution of the present application.

## Claims

1. An ultrahigh-molecular-weight polyolefin separator, comprising ultrahigh-molecular-weight polyethylene, wherein ultrahigh-molecular-weight polyethylene has an average molecular weight of ≥ 1 million, and the ultrahigh-molecular-weight polyolefin separator has a median aperture of 0.04 µm - 1 µm, a maximum aperture of no more than 1.2 µm, and a puncture strength of ≥ 50 gf.

2. The ultrahigh-molecular-weight polyolefin separator according to claim 1, wherein ultrahigh-molecular-weight polyethylene has an average molecular weight of 1 million - 1.5 million.

3. The ultrahigh-molecular-weight polyolefin separator according to claim 1, wherein the ultrahigh-molecular-weight polyolefin separator has a thickness of 7 µm - 15 µm.

4. The ultrahigh-molecular-weight polyolefin separator according to claim 1, wherein the ultrahigh-molecular-weight polyolefin separator has ionic conductivity of ≥ 1.8 mS/cm.

5. A method for preparing an ultrahigh-molecular-weight polyolefin separator, comprising the following steps:
a step of preparing micrometer-grade or submicrometer-grade sodium chloride particles:
adding ball beads to sodium chloride for ball grinding, grinding and then sieving and drying, and then adding a white oil to continue grinding, and then preparing the micrometer-grade or submicrometer-grade sodium chloride particles;
a step of mixing raw materials: selecting and mixing ultrahigh-molecular-weight polyethylene and the micron-grade or submicron-grade sodium chloride particles in the white oil, stirring thoroughly with a stirrer to form a premixed raw material, wherein the ultrahigh-molecular-weight polyethylene has an average molecular weight of ≥1 million, the white oil has a content greater than that of the ultrahigh-molecular-weight polyethylene, and the ultrahigh-molecular-weight polyethylene has a content greater than that of the micrometer-grade or submicrometer-grade sodium chloride particles;
a step of extrusion and molding: adding the premixed raw material to an extruder and subsequently extruding to form a cast sheet;
a step of extraction: first placing the cast sheet obtained by the extrusion and the molding in a mixture of acetone and water for extraction, and subsequently performing ultrasonic treatment while cleaning off sodium chloride and a part of the white oil in pores, then cleaning residual acetone on a surface with pure water, wiping a product dry, and then placing the product into pure dichloromethane for re-extraction, to form an extracted raw material; and
a step of stretching: subsequently placing the extracted raw material obtained by the extrusion and the molding into a handkerchief machine for stretching, and obtaining the ultrahigh-molecular-weight polyolefin separator after stretching.

6. The method for preparing the ultrahigh-molecular-weight polyolefin separator according to claim 5, wherein in the step of preparing the micrometer-grade or submicrometer-grade sodium chloride particles, zirconium ball beads of at least three different sizes are added to ordinary industrial grade sodium chloride, a mixture is ground and then sieved and dried, then, the white oil is added to continue grinding, and the micrometer-grade or submicrometer-grade sodium chloride particles are produced after grinding, the ordinary industrial grade sodium chloride being an industrial salt with a sodium chloride purity of 99% or more and a particle size of 0.5 mm - 2 mm, and the zirconium ball beads having a maximum diameter of no more than 1 mm.

7. The method for preparing the ultrahigh-molecular-weight polyolefin separator according to claim 5, wherein the micrometer-grade or submicrometer-grade sodium chloride particles have a diameter of 0.1 µm - 1 µm.

8. The method for preparing the ultrahigh-molecular-weight polyolefin separator according to claim 5, wherein in the step of mixing the raw materials, on the basis of a total weight of the premixed raw material, the micrometer-grade or submicrometer-grade sodium chloride particles have a weight percentage of content of 1wt% - 20wt%; ultrahigh-molecular-weight polyethylene has a weight percentage of content of 1wt% - 29wt%, and the white oil has a weight percentage of content of 60wt% - 80wt%.

9. The method for preparing the ultrahigh-molecular-weight polyolefin separator according to claim 5, wherein ultrahigh-molecular-weight polyethylene has an average molecular weight of 1 million - 1.5 million.

10. The method for preparing the ultrahigh-molecular-weight polyolefin separator according to claim 5, wherein in the step of preparing the micrometer-grade or submicrometer-grade sodium chloride particles, shapes of the micrometer-grade or submicrometer-grade sodium chloride particles comprise a spherical shape, a spheroidal shape or an irregular spherical shape, and the micrometer-grade or submicrometer-grade sodium chloride particles have a particle size distribution approximating a normal distribution, wherein 80% of the sodium chloride particles are spheroidal.
